# EUROPEAN PATENT APPLICATION

(11) **EP 4 525 516 A1**
(43) Date of publication of application: **19.03.2025**
(21) Application number: 22941163.2
(22) Date of filing: 12.05.2022
(51) Int. Cl.: H04W 36/00

(54) **MOBILITY EVENT PROCESSING METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: WU, Yumin, Beijing 100085 (CN); XIONG, Yi, Beijing 100085 (CN)
(74) Representative: Hersina, Günter
(86) International application number: PCT/CN2022/092567
(87) International publication number: WO 2023/216207

(57) **Abstract**

Provided in the embodiments of the present disclosure are a mobility event processing method and apparatus, and a communication device and a storage medium, wherein the mobility event processing method is executed by a first network node. The method comprises: sending first configuration information to a second network node, wherein the first configuration information at least comprises a trigger condition, the trigger condition being used for the second network node to determine a pre-configured condition, and the pre-configured condition being used for a UE to trigger a mobility management operation for an MCG and/or an SCG.

## Description

### TECHNICAL FIELD

The present invention relates to, but is not limited to, the field of communication technologies, and in particular relates to a method and an apparatus for processing a mobility event, a communication device, and a storage medium.

### BACKGROUND

In the fifth generation mobile communication technology (5G) system, a dual connectivity (DC) architecture is introduced. The DC architecture includes two cell groups, one of which is a master cell group (MCG) and the other is a secondary cell group (SCG). In a current 5G system, when the user equipment (UE) supports DC, it can only obtain the mobility gain brought by the mobility management operation technology in any cell group of the MCG or SCG, such as a lower switching failure probability; which affects the mobility performance of the UE.

### SUMMARY

Embodiments of the present invention provide a method and an apparatus for processing a mobility event, a communication device, and a storage medium.

According to a first aspect of embodiments of the present invention, there is provided a method for processing a mobility event, performed (executed) by a first network node, including: sending first configuration information to a second network node, in which the first configuration information at least includes a trigger condition; the trigger condition is used by the second network node to determine a preconfigured condition; and the preconfigured condition is used by a UE to trigger a mobility management operation for an MCG and/or an SCG.

According to a second aspect of embodiments of the present invention, there is provided a method for processing a mobility event, performed (executed) by a second network node, including: receiving first configuration information sent by a first network node, in which the first configuration information at least includes a trigger condition; determining second configuration information including a preconfigured condition based on the trigger condition; and sending the second configuration information to a UE; in which the second configuration information is used by the UE to trigger a mobility management operation for an MCG and/or an SCG.

According to a third aspect of embodiments of the present invention, there is provided a method for processing a mobility event, performed (executed) by a UE, including: receiving second configuration information sent by a second network node, in which the second configuration information at least includes a preconfigured condition; in which the preconfigured condition is determined by the second network node based on a trigger condition in first configuration information obtained from a first network node; and performing a mobility management operation for an MCG and/or an SCG based on the preconfigured condition.

According to a fourth aspect of embodiments of the present invention, there is provided an apparatus for processing a mobility event, applied to a first network node, including: a first sending module configured to send first configuration information to a second network node, in which the first configuration information at least includes a trigger condition; the trigger condition is used by the second network node to determine a preconfigured condition; and the preconfigured condition is used by a UE to trigger a mobility management operation for an MCG and/or an SCG.

According to a fifth aspect of embodiments of the present invention, there is provided an apparatus for processing a mobility event, applied to a second network node, including: a second receiving module configured to receive first configuration information sent by a first network node, in which the first configuration information at least includes a trigger condition; a second processing module configured to determine second configuration information including a preconfigured condition based on the trigger condition; and a second sending module configured to send the second configuration information to a UE; in which the second configuration information is used by the UE to trigger a mobility management operation for an MCG and/or an SCG.

According to a sixth aspect of embodiments of the present invention, there is provided an apparatus for processing a mobility event, applied to a UE, including: a third receiving module configured to receive second configuration information sent by a second network node, in which the second configuration information at least includes a preconfigured condition, in which the preconfigured condition is determined by the second network node based on a trigger condition in first configuration information obtained from a first network node; and a third processing module configured to perform a mobility management operation for an MCG and/or an SCG based on the preconfigured condition.

According to a fifth aspect of embodiments of the present invention, there is provided a communication device, including a processor and a memory for storing instructions executable by the processor; in which the processor is configured to implement the method for processing the mobility event in any embodiment of the present invention when running the executable instructions.

According to a sixth aspect of embodiments of the present invention, there is provided a computer storage medium having stored therein a computer executable program that, when executed by a processor, causes the method for processing the mobility event in any embodiment of the present invention to be implemented.

The technical solution provided in the embodiments of the present invention may have the following beneficial effects.

In an embodiment of the present invention, a first network node sends first configuration information to a second network node, in which the first configuration information at least includes a trigger condition; the trigger condition is used by the second network node to determine a preconfigured condition; and the preconfigured condition is used by a UE to trigger a mobility management operation for an MCG and/or an SCG. In this way, the preconfigured condition can be negotiated between multiple network nodes, so that a UE supporting dual connectivity can perform mobile management operations for both the MCG and the SCG at the same time, thereby improving the mobility performance of the UE. Moreover, the preconfigured condition can be negotiated between multiple network nodes, so that multiple network nodes maintain a consistent understanding of relevant information of the preconfigured condition, thereby improving the reliability of mobility management operations.

It is to be understood that both the foregoing general description and the following detailed description are illustrative and explanatory only and are not restrictive of embodiments of the present invention.

### BRIEF DESCRIPTION OF THE DRAWINGS

FIG. 1 is a schematic diagram showing a wireless communication system according to an illustrative embodiment.
FIG. 2 is a schematic flowchart showing a method for processing a mobility event according to an illustrative embodiment.
FIG. 3 is a schematic flowchart showing a method for processing a mobility event according to an illustrative embodiment.
FIG. 4 is a schematic flowchart showing a method for processing a mobility event according to an illustrative embodiment.
FIG. 5 is a schematic flowchart showing a method for processing a mobility event according to an illustrative embodiment.
FIG. 6 is a schematic flowchart showing a method for processing a mobility event according to an illustrative embodiment.
FIG. 7 is a schematic flowchart showing a method for processing a mobility event according to an illustrative embodiment.
FIG. 8 is a schematic flowchart showing a method for processing a mobility event according to an illustrative embodiment.
FIG. 9 is a block diagram showing an apparatus for processing a mobility event according to an illustrative embodiment.
FIG. 10 is a block diagram showing an apparatus for processing a mobility event according to an illustrative embodiment.
FIG. 11 is a block diagram showing an apparatus for processing a mobility event according to an illustrative embodiment.
FIG. 12 is a block diagram of a UE according to an illustrative embodiment.
FIG. 13 is a block diagram of a station according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with embodiments of the present invention. Instead, they are merely examples of apparatuses and methods consistent with aspects related to embodiments of the present invention as recited in the appended claims.

Terms used herein in embodiments of the present invention are only for the purpose of describing specific embodiments, but should not be construed to limit embodiments of the present invention. As used in the embodiments of the present invention and the appended claims, "a/an", and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present invention for describing various information, these information should not be limited by these terms. These terms are only used for distinguishing information of the same type from each other. For example, first information may also be referred to as second information, and similarly, the second information may also be referred to as the first information, without departing from the scope of embodiments of the present invention. As used herein, the term "if" may be construed to mean "when" or "upon" or "in response to determining" depending on the context.

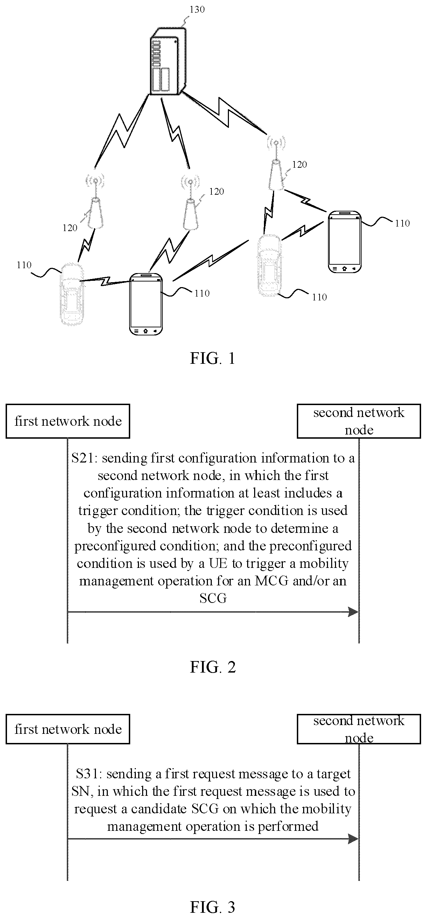

Referring to FIG. 1, which is a schematic diagram showing a wireless communication system provided in an embodiment of the present invention. As shown in FIG. 1, the wireless communication system is a communication system based on a cellular mobile communication technology, and may include several user equipments 110 and several base stations 120.

The user equipment 110 may be a device that provides voice and/or data connectivity to a user. The user equipment 110 can communicate with one or more core networks via a radio access network (RAN). The user equipment 110 can be an Internet of Things terminal, such as a sensor device, a mobile phone (or referred to as a "cellular" phone) and a computer with an Internet of Things terminal. For example, the user equipment 110 can be a fixed, portable, pocket-sized, handheld, computer built-in or vehicle-mounted apparatus. For example, the user equipment 110 may be a station (STA), a subscriber unit, a subscriber station, a mobile station, a mobile, a remote station, an access point, a remote terminal, an access terminal, a user terminal, a user agent, a user device, or a user equipment (UE). Alternatively, the user equipment 110 may also be a device of an unmanned aerial vehicle. Alternatively, the user equipment 110 may also be a vehicle-mounted device, for example, a driving computer with a wireless communication function, or a wireless communication device externally connected with a driving computer. Alternatively, the user equipment 110 may be a roadside device, such as a street lamp, a signal lamp or other roadside devices with a wireless communication function.

The base station 120 may be a network side device in the wireless communication system. The wireless communication system can be a 4th generation mobile communication (4G) system, also referred to as a long term evolution (LTE) system. Alternatively, the wireless communication system may also be a 5G system, also referred to as a new radio (NR) system or a 5G NR system. Alternatively, the wireless communication system may also be any generation system. The access network in the 5G system can be referred to as a new generation-radio access network (NG-RAN).

The base station 120 may be an evolved base station (eNB) used in the 4G system. Alternatively, the base station 120 may also be a base station adopting a centralized distributed architecture (gNB) in the 5G system. When the base station 120 adopts the centralized distributed architecture, it usually includes a central unit (CU) and at least two distributed units (DUs). A protocol stack of a packet data convergence protocol (PDCP) layer, a radio link control (RLC) layer and a media access control (MAC) layer is provided in the central unit. A protocol stack of a physical (PHY) layer is provided in the distributed unit. The specific implementation of the base station 120 is not limited in the embodiments of the present invention.

A wireless connection can be established between the base station 120 and the user equipment 110 through a wireless radio. In different embodiments, the wireless radio is a wireless radio based on the 4th generation mobile communication network technology (4G) standard. Alternatively, the wireless radio is a wireless radio based on the 5th generation mobile communication network technology (5G) standard. For example, the wireless radio is a new radio. Alternatively, the wireless radio can also be a wireless radio based on the next generation mobile communication network technology standard of the 5G.

In some embodiments, an end to end (E2E) connection may also be established between the user equipments 110, for example, a vehicle to vehicle (V2V) communication, a vehicle to infrastructure (V2I) communication and a vehicle to pedestrian (V2P) communication in a vehicle to everything (V2X) communication.

Here, the above-mentioned user equipment can be considered as the terminal device in the following embodiments.

In some embodiments, the wireless communication system may further include a network management device 130.

Several base stations 120 are connected to the network management device 130 respectively. The network management device 130 may be a core network device in the wireless communication system. For example, the network management device 130 may be a mobility management entity (MME) in an evolved packet core (EPC) network. Alternatively, the network management device may also be other core network devices, such as a serving gateway (SGW), a public data network gateway (PGW), a policy and charging rules function (PCRF), or a home subscriber server (HSS). The implementation form of the network management device 130 is not limited in the embodiments of the present invention.

In order to facilitate the understanding by those skilled in the art, multiple implementations are listed in the embodiments of the present invention to clearly illustrate the technical solutions of the embodiments of the present invention. Certainly, those skilled in the art can understand that the multiple embodiments provided in the embodiments of the present invention may be executed individually, or may be executed together with the methods in other embodiments among the embodiments of the present invention, or may be executed individually or in combination with some methods in other related technologies; which is not limited in the embodiments of the present invention.

In order to better understand the technical solutions described in any embodiment of the present invention, first, some related technologies are described.

In some embodiments, a dual connectivity architecture includes two cell groups: an MCG and an SCG, in which the MCG corresponds to a master node (MN) on a network side, and the SCG corresponds to a secondary node (SN) on the network side. Here, the MCG includes one primary cell (PCell) and at least one secondary cell (SCell), and the SCG includes one primary secondary cell (PSCell) and at least one secondary cell (SCell). Here, the PCell and the PSCell may be collectively referred to as special cells (SpCells).

In some embodiments, the UE may perform a mobility management operation based on a preconfigured condition, in which the preconfigured condition here includes: a measurement object and/or a trigger event. For example, when the measurement object of the UE meets the trigger event, the trigger event is used as the preconfigured condition. Here, the mobility management operation includes: a mobility process triggered based on the trigger event. The mobility process triggered based on the trigger event includes at least one of: a conditional handover (CHO), a conditional PSCell addition (CPA) or a conditional PSCell change (CPC).

In other embodiments, the UE may perform a mobility management operation based on a preconfigured condition. Here, the mobility management operation includes: selectively activating a cell group. The network side can provide the UE with a preconfigured cell group; the network side can subsequently activate or deactivate the preconfigured cell group via an activation signaling without re-providing the configuration of the cell group. Here, the preconfigured cell group may also be activated or deactivated by performing the triggering based on a trigger event.

In some embodiments, the network side configures a specific measurement event for the UE; and when the UE meets the measurement event, it performs the behavior configured by the network side (for example, reporting a measurement result or triggering a handover, or the like).

Here, the measurement object mainly includes, but is not limited to, at least one of: a measurement frequency, a measurement cell, and a measurement radio access technology. Here, the measurement frequency includes, but is not limited to, an absolute radio frequency channel number (ARFCN). Here, the measurement cell includes, but is not limited to, a physical cell identifier (PCI). Here, the measured wireless access technology includes, but is not limited to, one of 5G NR, 4G LTE and 3G UTRA.

Here, the trigger event includes, but is not limited to, at least one of: Class A events for a same-system measurement, and Class B events for a different-system measurement. Here, the Class A events for the same-system measurement include, but are not limited to, at least one of the following:
Event A1, indicating that a measurement result of a serving cell is greater than a threshold;
Event A2, indicating that the measurement result of the serving cell is less than the threshold;
Event A3, indicating that a measurement result of a neighboring cell is better than the measurement result of the serving cell by a certain value;
Event A4, indicating that the measurement result of the neighboring cell is greater than the threshold;
Event A5: indicating that the measurement result of the serving cell is less than threshold 1, while the measurement result of the neighboring cell is greater than threshold 2;
Event A6: indicating that the measurement result of the neighboring cell is better than a measurement result of a secondary serving cell by a certain value.

Here, the Class B events for the different-system measurement include, but are not limited to, at least one of the following:
Event B1: indicating that a measurement result of a neighboring cell of a different system is greater than the threshold;
Event B2: indicating that a measurement result of a primary serving cell is less than threshold 1, while the measurement result of the neighboring cell of the different system is greater than threshold 2.

In the existing 5G system, it is impossible to execute conditionally triggered mobility processes or processes of selectively activating a cell group for the MCG and the SCG at the same time, so that the UE supporting the DC can only obtain mobility gains brought by technologies such as conditionally triggered mobility management processes or selective activation processes in any one cell group of the MCG or SCG. If it is desired to support the mobility processes triggered based on a trigger condition or processes of selectively activating a cell group for the MCG and the SCG at the same time, how to negotiate a preconfigured condition between multiple nodes to improve the reliability of the UE and make multiple nodes have a consistent understanding of the preconfigured condition are problems that need to be solved.

As shown in FIG. 2, an embodiment of the present invention provides a method for processing a mobility event, which is performed (or executed) by a first network node and includes a step as follows.

At step S21: first configuration information is sent to a second network node, in which the first configuration information at least includes a trigger condition; the trigger condition is used by the second network node to determine a preconfigured condition; and the preconfigured condition is used by a UE to trigger a mobility management operation for an MCG and/or an SCG.

The first network node and the second network node involved in the embodiments of the present invention may both be network elements or functions in a network; and the first network node is different from the second network node. Here, the first network node and the second network node may be logical nodes flexibly deployed in a communication network, and the first network node and the second network node are not limited here.

In an embodiment, the first network node includes a source SN, and the second network node includes a source MN.

In another embodiment, the first network node includes a target MN, and the second network node includes a source MN.

An embodiment of the present invention provides a method for processing a mobility event, which is performed (or executed) by a first network node and includes: sending first configuration information to a second network node, in which the first configuration information at least includes a trigger condition; in which the trigger condition is used by a UE to trigger a mobility management operation for an MCG and/or an SCG.

Here, the preconfigured condition is used by the UE to trigger the mobility management operation for an MCG and/or an SCG, including one of the following:
the preconfigured condition being used by the UE to trigger the mobility management operation for the MCG;
the preconfigured condition being used by the UE to trigger the mobility management operation for the SCG;
the preconfigured condition being used by the UE to trigger the mobility management operation for the MCG and the SCG.

In some embodiments, the mobility management operation includes one of: a mobility operation triggered based on the trigger condition; or an operation of selectively activating a cell group.

For example, the first network node sends first configuration information to the second network node, in which the first configuration information includes at least a trigger condition; the trigger condition is used by the second network node to determine a preconfigured condition; and the preconfigured condition is used by the UE to trigger the mobility operation based on the trigger condition for the MCG and the SCG.

For example, the first network node sends first configuration information to the second network node, in which the first configuration information includes at least a trigger condition; the trigger condition is used by the second network node to determine a preconfigured condition; and the preconfigured condition is used by the UE to trigger an operation of selectively activating a cell group for the MCG and the SCG.

Here, the mobility operation triggered based on the trigger condition may be, but is not limited to, one of CHO, CPA, and CPC.

Here, in an embodiment, the UE triggers the mobility management operation for the MCG and/or SCG, which may be: the UE triggering the mobility management operation supporting the MCG and/or the SCG at the same time.

In some embodiments, the trigger condition includes, but is not limited to, at least one of an SCG trigger condition, or an MCG trigger condition.

Here, each of the SCG trigger condition and the MCG trigger condition may be, but is not limited to, at least one of the following:
Event A1, indicating that a measurement result of a serving cell is greater than a threshold;
Event A2, indicating that the measurement result of the serving cell is less than the threshold;
Event A3, indicating that a measurement result of a neighboring cell is better than the measurement result of the serving cell by a certain value;
Event A4, indicating that the measurement result of the neighboring cell is greater than the threshold;
Event A5: indicating that the measurement result of the serving cell is less than threshold 1, while the measurement result of the neighboring cell is greater than threshold 2;
Event A6: indicating that the measurement result of the neighboring cell is better than a measurement result of a secondary serving cell by a certain value.

Here, the Class B events for the different-system measurement include, but are not limited to, at least one of the following:
Event B1: indicating that a measurement result of a neighboring cell of a different system is greater than the threshold;
Event B2: indicating that a measurement result of a primary serving cell is less than threshold 1, while the measurement result of the neighboring cell of the different system is greater than threshold 2.

In some embodiments, the preconfigured condition may be a trigger condition based on a combination of an MCG trigger condition and an SCG trigger condition. Here, the trigger condition after the merging of the MCG trigger condition and the SCG trigger condition may be, but is not limited to, one of: the MCG trigger condition, the SCG trigger condition, and both the MCG trigger condition and the SCG trigger condition.

For example, in case that the MCG trigger condition is Event A1 and the SCG trigger condition is Event A3, then the preconfigured trigger condition may be Event A1, or Event A3, or both Event A1 and Event A3.

In an embodiment, the MCG includes a candidate MCG; the SCG includes a candidate SCG; and the preconfigured condition is used by the UE to trigger the mobility management operation for the candidate MCG and the candidate SCG.

In some embodiments, the first configuration information includes at least one of:
type information indicating a type of the mobility management operation, in which the type information is used to indicate a type of one of: a mobility operation triggered based on the trigger condition, and an operation of selectively activating a cell group;
purpose information indicating preparing a candidate SCG and/or a candidate MCG; or
a candidate cell group for the mobility management operation; in which the candidate cell group includes the candidate SCG, or includes the candidate SCG and the candidate MCG.

Here, the purpose information indicating preparing the candidate SCG and/or the candidate MCG includes one of:
purpose information indicating preparing the candidate SCG;
purpose information indicating preparing the candidate MCG;
purpose information indicating preparing the candidate SCG and the candidate MCG.

For example, in case that the first network node includes a source SN and the second network node includes a source MN, the candidate cell group for the mobility management operation included in the first configuration information may be a candidate SCG. In an embodiment of the present invention, in case that the first network node includes a source SN, the SN cannot determine the candidate MCG. In this case, the candidate cell group in the first configuration information sent by the source SN to the source MN may not include the candidate MCG, and the candidate MCG may be determined by the source MN.

For example, in case that the first network node includes a target MN and the second network node includes a source MN, the candidate cell group for the mobility management operation included in the first configuration information may be a candidate SCG, or the candidate cell group for the mobility management operation included in the first configuration information may be a candidate SCG and a candidate MCG. In an embodiment of the present invention, in case that the first network node includes a target MN, the target MN may determine a candidate MCG. In this case, the candidate cell group in the first configuration information sent by the target MN to the source MN may include the candidate MCG, or may not include the candidate MCG.

In an embodiment of the present invention, in case that the first configuration information includes type information indicating the type of the mobility management operation, the first network node, the second network node and the UE can know what type of mobility management operation is being performed. In case that the first configuration information includes purpose information, the second network node may need to know the purpose information for preparing the candidate SCG. In case that the first configuration information includes a candidate cell group, the second network node and the UE can know that the configuration of the cell group to be triggered is the candidate SCG, or is the candidate SCG and the candidate MCG. In this way, the understanding of the relevant information of the preconfigured condition among multiple nodes is made consistent, thereby improving the reliability of the mobility management operation of the UE.

In some embodiments, the first configuration information includes a measurement object, in which the measurement object includes at least one of a measurement cell, a measurement frequency, and a measurement radio access technology.

Here, the measurement cell includes any one cell or a cell group, in which the cell group includes a plurality of cells. In the embodiments of the present invention, multiple or a plurality of means two or more than two. Here, the cell may be at least one of a primary cell, a primary secondary cell, or a secondary cell. For example, the cell may be a primary cell and at least one secondary cell in an MCG; and/or the cell may be a primary secondary cell and at least one secondary cell in an SCG.

Here, the measurement frequency includes any frequency point or frequency band range. Here, the measurement frequency may also be a frequency corresponding to at least one of a primary cell and at least one secondary cell in the MCG, or a frequency corresponding to at least one of a primary secondary cell and at least one secondary cell in the SCG.

Here, the measurement radio access technology includes, but is not limited to, at least one of 5G NR, 4G LTE or 3G UTRA.

In an embodiment, the preconfigured condition is used by the UE to trigger the mobility management operation for the MCG and/or the SCG when it determines that the measurement object meets the preconfigured condition.

For example, in case that the measurement objects in the first configuration information are primary cell 1 and secondary cell 2, the primary cell 1 is a serving cell and the secondary cell 2 is a neighboring cell, and the preconfigured condition is Event A1; then in case that the UE determines that the measurement result of the primary cell 1 is greater than the threshold, the mobility management operation for the MCG and/or the SCG is triggered.

For example, in case that the measurement objects in the first configuration information are primary cell 1 and secondary cell 2, the primary cell 1 is a serving cell and the secondary cell 2 is a neighboring cell, and the preconfigured condition is Event A1 and Event A4; then in case that the UE determines that the measurement result of the primary cell 1 is greater than the threshold and the measurement result of the secondary cell is greater than the threshold, the mobility management operation for the MCG and/or the SCG is triggered.

In some embodiments, in case that the trigger condition is not configured with a corresponding measurement object, the measurement object corresponding to the trigger condition includes: a candidate cell group for the mobility management operation, and/or a frequency corresponding to a candidate cell group for the mobility management operation.

In some embodiments, the measurement object corresponding to the trigger condition includes at least one of a primary secondary cell in a candidate SCG, a primary cell in a candidate MCG, a frequency corresponding to the primary secondary cell in the candidate SCG, or a frequency corresponding to the primary cell in the candidate MCG.

For example, the first network node includes a source SN, and the second network node includes a source MN. In case that the trigger condition is not configured with a corresponding measurement object, the measurement object corresponding to the trigger condition may be a primary secondary cell in a candidate SCG, and/or a frequency corresponding to the primary secondary cell in the candidate SCG.

For example, the first network node includes a target MN, and the second network node includes a source MN. In case that the trigger condition is not configured with a corresponding measurement object, the measurement object corresponding to the trigger condition may be at least one of a primary secondary cell in a candidate SCG, a primary cell in a candidate MCG, a frequency corresponding to the primary secondary cell in the candidate SCG, or a frequency corresponding to the primary cell in the candidate MCG.

In an embodiment of the present invention, in case that the first configuration information sent by the first network node to the second network node does not include a measurement object for a measurement event, it can be considered that the candidate cell group for the mobility management operation in the first configuration information is the measurement object required by the UE. In this way, when the first network node does not configure the corresponding measurement object for the trigger condition, the UE can still perform the mobility management operation for the MCG and/or the SCG based on the preconfigured condition.

In an embodiment of the present invention, a first network node sends first configuration information to a second network node, in which the first configuration information at least includes a trigger condition; the trigger condition is used by the second network node to determine a preconfigured condition; and the preconfigured condition is used by a UE to trigger a mobility management operation for an MCG and/or an SCG. In this way, the preconfigured condition can be negotiated between multiple network nodes, so that a UE supporting dual connectivity can perform mobile management operations for both the MCG and the SCG at the same time, thereby improving the mobility performance of the UE. Moreover, the preconfigured condition can be negotiated between multiple network nodes, so that multiple network nodes maintain a consistent understanding of relevant information of the preconfigured condition, thereby improving the reliability of mobility management operations.

It should be noted that those skilled in the art can understand that the method provided in the embodiments of the present invention can be executed alone or together with some methods in the embodiments of the present invention or some methods in related technologies.

In some embodiments, sending the first configuration information in step S21 includes: sending the first configuration information based on an inter-base-station interface signaling.

An embodiment of the present invention provides a method for processing a mobility event, which is performed by a first network node and includes: sending first configuration information based on an inter-base-station interface signaling.

The inter-base-station interface signaling may be, but is not limited to, a radio resource control (RRC) signaling or an Xn signaling. Here, the RRC signaling may be an RRC signaling in a predetermined format. Here, the Xn signaling may be an Xn signaling in a predetermined format.

In some embodiments, sending the first configuration information to the second network node in step S21 includes at least one of: sending the measurement cell corresponding to the trigger condition to the second network node based on an RRC signaling; or sending the measurement cell and/or the measurement frequency corresponding to the trigger condition to the second network node based on an Xn signaling.

An embodiment of the present invention provides a method for processing a mobility event, which is performed by a first network node and includes: sending a measurement cell corresponding to a trigger condition to a second network node based on an RRC signaling.

An embodiment of the present invention provides a method for processing a mobility event, which is performed by a first network node and includes: sending a measurement frequency corresponding to a trigger condition to a second network node based on an RRC signaling.

An embodiment of the present invention provides a method for processing a mobility event, which is performed by a first network node and includes: sending a measurement cell and/or a measurement frequency corresponding to a trigger condition to a second network node based on an Xn signaling.

In an embodiment of the present invention, an RRC signaling in a predetermined format agreed upon by a wireless protocol may carry the measurement cell and/or the measurement frequency corresponding to the trigger condition; or an Xn signaling in a predetermined format agreed upon by a wireless protocol may carry the measurement cell and/or the measurement frequency corresponding to the trigger condition.

In an embodiment of the present invention, the measurement cell and/or the measurement frequency corresponding to the trigger condition may be carried by an RRC signaling in a predetermined format negotiated between multiple network nodes; or the measurement cell and/or the measurement frequency corresponding to the trigger condition may be carried by an Xn signaling in a predetermined format negotiated between multiple network nodes. The multiple network nodes include, but are not limited to, at least two of: a source SN, a source MN, a target SN, a target MN, and a UE.

In the embodiments of the present invention, there is no need to limit the specific format of the RRC signaling and/or the Xn signaling, and it is only necessary to ensure that the measurement cells and/or measurement frequencies corresponding to the trigger conditions understood by multiple network nodes are consistent.

It should be noted that those skilled in the art can understand that the method provided in the embodiments of the present invention can be executed alone or together with some methods in the embodiments of the present invention or some methods in related technologies.

In some embodiments, the trigger condition includes an SCG trigger condition; the SCG trigger condition and an MCG trigger condition determined by the second network node are used to determine the preconfigured condition; and the preconfigured condition is used by the UE to trigger the mobility management operation for the MCG and the SCG when the preconfigured condition is met.

Here, the first network node may be a source SN or a target MN, and the second network node may be a source MN. In case that the first network node is a source MN or a target MN, the MCG trigger condition may be determined by the source MN; and/or the SCG trigger condition may be acquired by the target MN or the source SN.

As shown in FIG. 3, an embodiment of the present invention provides a method for processing a mobility event, which is performed by a first network node and includes a step as follows.

At step S31: a first request message is sent to a target SN, in which the first request message is used to request a candidate SCG on which the mobility management operation is performed.

Here, the first network node may be a source SN or a target MN.

In an embodiment, the first request message is used to request whether the target SN accepts the mobility management operation.

Here, the mobility management operation is a mobility management operation for an MCG and/or an SCG.

In some embodiments, the first request message further includes at least one of: type information indicating a type of the mobility management operation, in which the type information is used to indicate a type of one of a mobility operation triggered based on the trigger condition, and an operation of selectively activating a cell group; or purpose information indicating preparing the candidate SCG.

Thus, in the embodiment of the present invention, a first request message may be sent to the target SN through the first network node to notify the target SN to prepare a candidate SCG and request a candidate SCG for the UE to perform the mobility management operation for the MCG and/or the SCG based on the preconfigured condition.

An embodiment of the present invention provides a method for processing a mobility event, which is performed by a first network node and includes: receiving a first response message sent by a target SN, in which the first response message is used to indicate one of: acceptance of the mobility management operation, and rejection of the mobility management operation.

Here, the first response message is determined by the target SN based on the first request message.

For example, in case that the first response message received by the first network node is used to indicate acceptance of the mobility management operation, the first response message may further include a candidate SCG.

Thus, in the embodiment of the present invention, the first network node can receive the first response message determined by the target SN based on the first request message, so that the first network node can accurately obtain the candidate SCG for the UE to perform the mobility management operation for the MCG and/or the SCG. It can also be accurately known whether the target SN accepts the mobility management operation for the MCG and/or the SCG. In this way, in the embodiment of the present invention, it is possible to negotiate with the target SN the relevant information of the preconfigured condition, such as the candidate SCG of the preconfigured condition.

It should be noted that those skilled in the art can understand that the method provided in the embodiments of the present invention can be executed alone or together with some methods in the embodiments of the present invention or some methods in related technologies.

In some embodiments, the first network node includes a source SN, the second network node includes a source MN, and sending the first configuration information to the second network node in step S21 includes sending the first configuration information to the source MN in response to a first response message received from the target SN indicating acceptance of the mobility management operation and/or carrying of the candidate SCG.

An embodiment of the present invention provides a method for processing a mobility event, which is performed (executed) by a source SN and includes: sending the first configuration information to the source MN in response to a first response message received from the target SN indicating acceptance of the mobility management operation and/or carrying of the candidate SCG.

In an embodiment, when the target SN accepts the mobility management operation, the target SN sends a first response message carrying the candidate SCG.

In the embodiment of the present invention, when the target SN accepts the UE's mobility management operation(s) for the MCG and/or the SCG, it is determined that the first network node sends the first configuration information to the second network node so that the UE triggers the mobility management operation(s) for the MCG and/or the SCG. In this way, the negotiation of the target SN on the relevant information of the preconfigured condition can be taken into consideration, further improving the reliability of the UE in performing the mobility management operation.

It should be noted that those skilled in the art can understand that the method provided in the embodiments of the present invention can be executed alone or together with some methods in the embodiments of the present invention or some methods in related technologies.

In some embodiments, the trigger condition includes an SCG trigger condition and an MCG trigger condition; the SCG trigger condition and the MCG trigger condition are used by the source MN to determine the preconfigured condition; and the preconfigured condition is used by the UE to trigger the mobility management operation(s) for the MCG and/or the SCG when the preconfigured condition is met.

Here, the first network node may be a target MN, and the second network node may be a source MN.

In an embodiment of the present invention, the target MN may also determine the MCG trigger condition, such that the first configuration information sent by the target MN to the source MN may include an SCG trigger condition and an MCG trigger condition. The SCG trigger condition may be acquired by the target MN.

In some embodiments, the first network node includes a target MN, the second network node includes a source MN, and sending the first request message to the target SN in step S31 includes sending the first request message to the target SN in response to receiving a second request message sent by the source MN; in which the second request message includes one of: purpose information indicating preparing a candidate MCG, and purpose information indicating preparing a candidate MCG and preparing a candidate SCG.

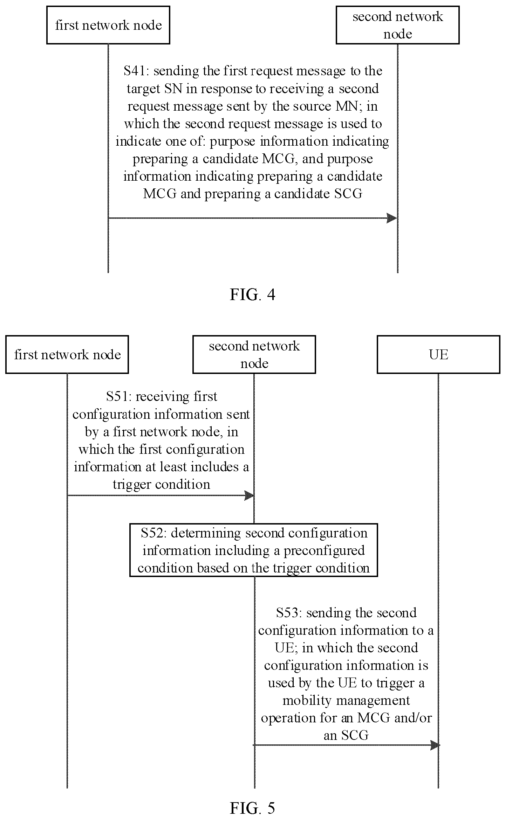

As shown in FIG. 4, an embodiment of the present invention provides a method for processing a mobility event, which is performed by a target MN and includes a step as follows.

At step S41: the first request message is sent to the target SN in response to receiving a second request message sent by the source MN; in which the second request message is used to indicate one of: purpose information indicating preparing a candidate MCG, and purpose information indicating preparing a candidate MCG and preparing a candidate SCG.

In some embodiments of the present invention, the first request message is the first request message in the above embodiments.

Here, when the second request message includes purpose information indicating preparing the candidate MCG, the target MN needs to obtain a candidate SCG, and sends the candidate SCG to the source MN. Alternatively, when the second request message includes purpose information indicating preparing the candidate MCG and preparing the candidate SCG, the target MN needs to obtain the candidate SCG and needs to prepare the candidate MCG, and sends the candidate SCG and the candidate MCG to the source MN.

In an embodiment of the present invention, the second request message sent by the source MN to the target MN can be used to obtain the candidate MCG and/or the candidate SCG for the UE to perform the mobility management operation(s) for the MCG and/or the SCG.

An embodiment of the present invention provides a method for processing a mobility event, which is performed by a target MN and includes: in response to receiving a first response message sent by the target SN, sending a second response message to the source MN; in which the second response message is used to indicate one of: acceptance of the mobility management operation; and rejection of the mobility management operation.

In some embodiments of the present invention, the first response message is the first response message in the above embodiments.

Here, the first response message is determined by the target SN based on the first request message, and the second response message is determined by the target MN based on the second request message.

In this way, in the embodiments of the present invention, after the target MN receives the first response message sent by the target SN, it can be determined whether the target MN accepts the UE's mobility management operation(s) for the MCG and/or the SCG, and send the result of accepting the UE's mobility management operation(s) for the MCG and/or the SCG to the source MN based on the second response message. In this way, in the embodiments of the present invention, the negotiation of the target MN on the relevant information (such as the candidate MCG) of the preconfigured condition is taken into account, thereby further improving the reliability of the UE in performing the mobility management operation.

In some embodiments, sending the first configuration information to the second network node in step S21 includes: sending the first configuration information to the source MN after sending the second response message indicating acceptance of the mobility management operation.

An embodiment of the present invention provides a method for processing a mobility event, which is performed by a target MN and includes: sending the first configuration information to the source MN after sending the second response message indicating acceptance of the mobility management operation.

Thus, in the embodiment of the present invention, when the target MN accepts the UE's mobility management operation for the MCG and/or the SCG, it is determined that the first network node sends the first configuration information to the second network node, so that the UE triggers the mobility management operation for the MCG and/or the SCG. In this way, the negotiation of the target MN on the relevant information of the preconfigured condition can be taken into consideration, thereby further improving the reliability of the UE in performing the mobility management operation.

It should be noted that those skilled in the art can understand that the method provided in the embodiments of the present invention can be executed alone or together with some methods in the embodiments of the present invention or some methods in related technologies.

The following method for processing the mobility event is performed by a second network node, and is similar to the description of the method for processing the mobility event performed by the first network node mentioned above. Moreover, for technical details not disclosed in the embodiments of the method for processing the mobility event performed by the second network node, reference is made to the description of the examples of the method for processing the mobility event performed by the first network node, and no detailed description is given here.

As shown in FIG. 5, an embodiment of the present invention provides a method for processing a mobility event, which is performed by a second network node and includes steps as follows.

At step S51: first configuration information sent by a first network node is received, in which the first configuration information at least includes a trigger condition.

At step S52: second configuration information including a preconfigured condition is determined based on the trigger condition.

At step S53: the second configuration information is sent to a UE; in which the second configuration information is used by the UE to trigger a mobility management operation for an MCG and/or an SCG.

In some embodiments of the present invention, the first network node and the second network node are the first network node and the second network node in the above embodiments respectively. The first configuration information is the first configuration information in the above embodiments, the trigger condition is the trigger condition in the above embodiments, and the mobility management operation is the mobility management operation in the above embodiments.

For example, the first network node includes a source SN or a target MN, and the second network node includes a source MN.

For example, the mobility management operation includes one of: a mobility operation triggered based on the trigger condition; or an operation of selectively activating a cell group.

For example, the mobility operation triggered based on the trigger condition may be, but is not limited to, one of CHO, CPA, and CPC.

For example, the trigger condition includes, but is not limited to, at least one of an SCG trigger condition, or an MCG trigger condition.

For example, each of the SCG trigger condition and the MCG trigger condition may be, but is not limited to, at least one of the following:
Event A1, indicating that a measurement result of a serving cell is greater than a threshold;
Event A2, indicating that the measurement result of the serving cell is less than the threshold;
Event A3, indicating that a measurement result of a neighboring cell is better than the measurement result of the serving cell by a certain value;
Event A4, indicating that the measurement result of the neighboring cell is greater than the threshold;
Event A5: indicating that the measurement result of the serving cell is less than threshold 1, while the measurement result of the neighboring cell is greater than threshold 2;
Event A6: indicating that the measurement result of the neighboring cell is better than a measurement result of a secondary serving cell by a certain value.

For example, the Class B events for the different-system measurement include, but are not limited to, at least one of the following:
Event B1: indicating that a measurement result of a neighboring cell of a different system is greater than the threshold;
Event B2: indicating that a measurement result of a primary serving cell is less than threshold 1, while the measurement result of the neighboring cell of the different system is greater than threshold 2.

For example, the preconfigured condition may be a trigger condition based on a combination of an MCG trigger condition and an SCG trigger condition. Here, the trigger condition after the merging of the MCG trigger condition and the SCG trigger condition may be, but is not limited to, one of: the MCG trigger condition, the SCG trigger condition, and both the MCG trigger condition and the SCG trigger condition.

For example, the first configuration information includes at least one of:
type information indicating a type of the mobility management operation, in which the type information is used to indicate a type of one of: a mobility operation triggered based on the trigger condition, and an operation of selectively activating a cell group;
purpose information indicating preparing a candidate SCG and/or a candidate MCG; or
a candidate cell group for the mobility management operation; in which the candidate cell group includes the candidate SCG.

For example, the first configuration information includes a measurement object, in which the measurement object includes at least one of a measurement cell, a measurement frequency, and a measurement radio access technology.

In some embodiments, in case that the trigger condition is not configured with a corresponding measurement object, the measurement object corresponding to the trigger condition includes: a candidate cell group for the mobility management operation, or a frequency corresponding to a candidate cell group for the mobility management operation.

In some embodiments, the measurement object corresponding to the trigger condition includes at least one of a primary secondary cell in a candidate SCG, a primary cell in a candidate MCG, a frequency corresponding to the primary secondary cell in the candidate SCG, or a frequency corresponding to the primary cell in the candidate MCG.

In some embodiments, receiving the first configuration information sent by the first network node in step S51 includes one of: receiving the measurement cell corresponding to the trigger condition sent by the first network node based on an RRC signaling; or receiving the measurement cell and/or the measurement frequency corresponding to the trigger condition sent by the first network node based on an Xn signaling.

An embodiment of the present invention provides a method for processing a mobility event, which is performed by a second network node and includes: one of: receiving a measurement cell corresponding to a trigger condition sent by a first network node based on an RRC signaling; or receiving a measurement cell and/or a measurement frequency corresponding to a trigger condition sent by a first network node based on an Xn signaling.

Regarding specific details of the above implementations, reference can be made to the description of the first network node, which will not be described in detail here.

It should be noted that those skilled in the art can understand that the method provided in the embodiments of the present invention can be executed alone or together with some methods in the embodiments of the present invention or some methods in related technologies.

In some embodiments, the trigger condition includes an SCG trigger condition; and step S52 includes: determining the second configuration information comprising the preconfigured condition based on the SCG trigger condition and an MCG trigger condition determined by the second network node.

An embodiment of the present invention provides a method for processing a mobility event, which is performed by a second network node, and includes: determining second configuration information comprising a preconfigured condition based on an SCG trigger condition and an MCG trigger condition determined by the second network node.

An embodiment of the present invention provides a method for processing a mobility event, which is performed by a second network node and includes: determining an MCG trigger condition.

An embodiment of the present invention provides a method for processing a mobility event, which is performed by a second network node and includes: determining a preconfigured condition based on an SCG trigger condition and an MCG trigger condition.

Here, the preconfigured condition determined by the second network node may be, but is not limited to, one of: an SCG trigger condition, or an MCG trigger condition, or both an SCG trigger condition and an MCG trigger condition.

For example, the second network node obtains first configuration information, in which the first configuration information includes the SCG trigger condition of Event A1; the second network node determines that the MCG trigger condition is Event A3; then the second network node may determine that the preconfigured trigger condition is Event A1, or Event A3, or both Event A1 and Event A3 based on the SCG trigger condition including Event A1 and the MCG trigger condition including Event A3.

Here, the first network node includes a source SN or a target MN, and the second network node includes a source MN.

Thus, in the embodiment of the present invention, in case that the first network node is the source SN or the target MN, the second network node may send the first configuration information carrying the SCG trigger condition through the source SN or the target MN to obtain the SCG trigger condition, and determine the MCG trigger condition through the source MN.

In some embodiments, the trigger condition includes an SCG trigger condition and an MCG trigger condition; and step S52 includes: determining the second configuration information including the preconfigured condition based on the SCG trigger condition and the MCG trigger condition.

An embodiment of the present invention provides a method for processing a mobility event, which is performed by a second network node and includes: determining second configuration information including a preconfigured condition based on an SCG trigger condition and an MCG trigger condition.

For example, the second network node obtains first configuration information, in which the first configuration information includes the SCG trigger condition of Event A1 and the MCG trigger condition of Event A4; then the second network node may determine that the preconfigured trigger condition is Event A1, or Event A4, or both Event A1 and Event A4 based on the SCG trigger condition including Event A1 and the MCG trigger condition including Event A4.

Here, the first network node includes a target MN, and the second network node includes a source MN.

Thus, in the embodiment of the present invention, in case that the first network node is the target MN, the target MN can determine the MCG trigger condition. Thus, the second network node can obtain the MCG trigger condition and the SCG trigger condition through the first configuration information carrying the SCG trigger condition and the MCG trigger condition sent by the target MN.

In some embodiments, the second configuration information includes a candidate MCG and/or a candidate SCG.

In some embodiments, the second configuration information includes: type information indicating a type of the mobility management operation, in which the type information is used to indicate a type of one of: a mobility operation triggered based on the trigger condition, and an operation of selectively activating a cell group.

In some embodiments, the second configuration information includes a measurement object; in which the measurement object includes at least one of a measurement cell, a measurement frequency, or a measurement radio access technology.

Thus, in the embodiment of the present invention, in case that the second network node sends the candidate MCG and/or the candidate SCG to the UE, the UE may perform the mobility management operation for the candidate MCG and/or the candidate SCG. In case that the second network node sends the information indicating the type of the mobility management operation to the UE, the UE may be aware of the type of the mobility management operation. In this way, multiple network nodes can maintain a consistent understanding of the relevant information of the preconfigured condition.

Regarding specific details of the above implementations, reference can be made to the description of the first network node, which will not be described in detail here.

It should be noted that those skilled in the art can understand that the method provided in the embodiments of the present invention can be executed alone or together with some methods in the embodiments of the present invention or some methods in related technologies.

The following method for processing the mobility event is performed by a UE, and is similar to the description of the method(s) for processing the mobility event(s) performed by the first network node and/or the second network node mentioned above. Moreover, for technical details not disclosed in the embodiments of the method for processing the mobility event performed by the UE, reference is made to the description of the examples of the method(s) for processing the mobility event(s) performed by the first network node and/or the second network node, and no detailed description is given here.

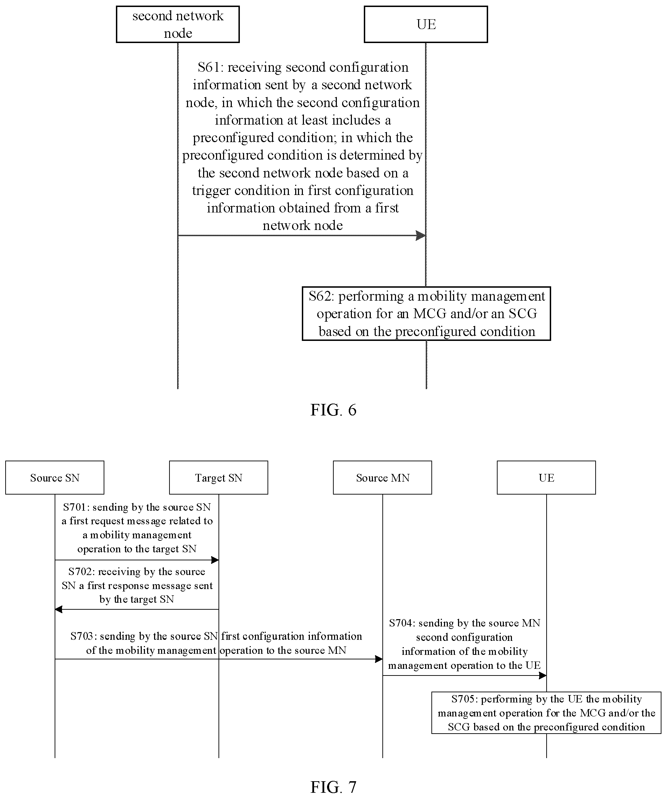

As shown in FIG. 6, an embodiment of the present invention provides a method for processing a mobility event, which is performed by a UE and includes steps as follows.

At step S61: second configuration information sent by a second network node is received, in which the second configuration information at least includes a preconfigured condition; in which the preconfigured condition is determined by the second network node based on a trigger condition in first configuration information obtained from a first network node.

At step S62: a mobility management operation for an MCG and/or an SCG is performed based on the preconfigured condition.

Here, the mobility management operation for the MCG and/or the SCG is performed in step S62, including one of: performing the mobility management operation for the MCG, performing the mobility management operation for the SCG, or performing the mobility management operation for the MCG and the SCG.

In some embodiments of the present invention, the first network node and the second network node are the first network node and the second network node in the above embodiments respectively. The first configuration information is the first configuration information in the above embodiments, and the trigger condition is the trigger condition in the above embodiments.

For example, the first network node includes a source SN or a target MN, and the second network node includes a source MN.

For example, the mobility management operation includes one of: a mobility operation triggered based on the trigger condition; or an operation of selectively activating a cell group.

For example, the mobility operation triggered based on the trigger condition may be, but is not limited to, one of CHO, CPA, and CPC.

For example, the trigger condition includes, but is not limited to, at least one of an SCG trigger condition, or an MCG trigger condition.

For example, each of the SCG trigger condition and the MCG trigger condition may be, but is not limited to, at least one of Event A1, Event A2, Event A3, Event A4, Event A5, Event A6, Event B1, or Event B2.

For example, the preconfigured condition may be a trigger condition based on a combination of an MCG trigger condition and an SCG trigger condition. Here, the trigger condition after the merging of the MCG trigger condition and the SCG trigger condition may be, but is not limited to, one of: the MCG trigger condition, the SCG trigger condition, and both the MCG trigger condition and the SCG trigger condition.

For example, the first configuration information includes at least one of:
type information indicating a type of the mobility management operation, in which the type information is used to indicate a type of one of: a mobility operation triggered based on the trigger condition, and an operation of selectively activating a cell group;
purpose information indicating preparing a candidate SCG and/or a candidate MCG; or
a candidate cell group for the mobility management operation; in which the candidate cell group includes the candidate SCG.

For example, the first configuration information includes a measurement object, in which the measurement object includes at least one of a measurement cell, a measurement frequency, and a measurement radio access technology.

In some embodiments of the present invention, the second configuration information is the second configuration information in the above embodiments.

In some embodiments, the second configuration information includes a candidate MCG and/or a candidate SCG.

In some embodiments, the second configuration information includes: type information indicating a type of the mobility management operation, in which the type information is used to indicate a type of one of: a mobility operation triggered based on the trigger condition, and an operation of selectively activating a cell group.

In some embodiments, the second configuration information includes a measurement object; in which the measurement object includes at least one of a measurement cell, a measurement frequency, or a measurement radio access technology.

In some embodiments, step S62 includes: performing the mobility management operation for the MCG and/or the SCG in response to the measurement object meeting the preconfigured condition.

An embodiment of the present invention provides a method for processing a mobility event, which is performed by a second network node, and includes: performing a mobility management operation for an MCG and/or an SCG in response to a measurement object meeting a preconfigured condition.

In some embodiments, step S62 includes: performing the mobility management operation for the MCG and/or the SCG in response to the measurement cell and/or the measurement frequency in the measurement object meeting the preconfigured condition. Here, the measurement frequency refers to a frequency corresponding to the measurement cell.

An embodiment of the present invention provides a method for processing a mobility event, which is performed by a second network node, and includes: performing a mobility management operation for an MCG and/or an SCG in response to a measurement cell and/or a measurement frequency in a measurement object meeting a preconfigured condition.

In some embodiments, step S62 includes: performing a mobility management operation for a candidate MCG and a candidate SCG in response to the measurement object meeting the preconfigured condition.

An embodiment of the present invention provides a method for processing a mobility event, which is performed by a second network node and includes: performing a mobility management operation on a candidate MCG and a candidate SCG in response to a measurement object meeting a preconfigured condition.

Thus, in the embodiment of the present invention, in case that a cell corresponding to the measurement cell and/or the measurement frequency in the measurement object meets the preconfigured condition, the mobility management operations for the candidate MCG and the candidate SCG are performed. Thus, the UE supporting DC can perform mobility management operations for both the MCG and the SCG at the same time, thereby improving the mobility performance of the UE.

Regarding specific details of the above implementations, reference can be made to the description of the first network node and/or the second network node, which will not be described in detail here.

It should be noted that those skilled in the art can understand that the method provided in the embodiments of the present invention can be executed alone or together with some methods in the embodiments of the present invention or some methods in related technologies.

In order to further explain any embodiment of the present invention, several specific examples are provided below.

### Example 1

As shown in FIG. 7, an embodiment of the present invention provides a method for processing a mobility event, which is performed (executed) by a communication device, in which the communication device includes a first network node, a second network node, a target SN, and a UE. The method for processing the mobility event includes the following steps.

Here, the first network node includes a source SN, and the second network node includes a source MN.

At step S701: the source SN sends a first request message related to a mobility management operation to the target SN.

Here, the first request message includes at least one of: type information indicating a type of the mobility management operation, in which the type information is used to indicate a type of one of: a mobility operation triggered based on the trigger condition, and an operation of selectively activating a cell group; or purpose information indicating preparing a candidate SCG and/or a candidate MCG.

Here, the mobility management operation includes one of: a mobility operation triggered based on the trigger condition, and an operation of selectively activating a cell group. Here, the mobility operation triggered based on the trigger condition includes at least one of CHO, CPA, or CPC.

At step S702: the source SN receives a first response message sent by the target SN.

Here, the first response message is used to indicate one of: acceptance of the mobility management operation, and rejection of the mobility management operation.

In an optional embodiment, the target SN determines to accept the mobility management operation and sends a candidate SCG to the source SN.

At step S703: the source SN sends first configuration information of the mobility management operation to the source MN.

In an optional embodiment, the source SN sends first configuration information of the mobility management operation to the source MN, in which the first configuration information includes a trigger condition, the trigger condition is used by the source MN to determine a preconfigured condition, and the preconfigured condition is used by the UE to trigger a mobility management operation for an MCG and/or an SCG.

Here, the first configuration information includes at least one of: type information indicating a type of the mobility management operation, in which the type information is used to indicate a type of one of: a mobility operation triggered based on the trigger condition, and an operation of selectively activating a cell group; purpose information indicating preparing a candidate SCG and/or a candidate MCG; or a candidate SCG.

Here, the first configuration information includes at least one of a trigger condition, or a measurement object corresponding to the trigger condition; in which the measurement object includes at least one of a measurement cell, a measurement frequency, or a measurement radio access technology.

Here, the measurement cell includes any one cell or a cell group, in which the cell group includes a plurality of cells. The measurement frequency includes a frequency corresponding to any one cell or a frequency corresponding to a cell group. The measurement radio access technology includes, but is not limited to, at least one of 5G NR, 4G LTE or 3G UTRA.

In an optional embodiment, the trigger condition includes an SCG trigger condition; in which the SCG trigger condition includes at least one of Event A1, Event A2, Event A3, Event A4, Event A5, Event A6, Event B1, or Event B2.

In an optional embodiment, in case that the trigger condition is not configured with a corresponding measurement object, the measurement object corresponding to the trigger condition includes: a candidate cell group for the mobility management operation, and/or a frequency corresponding to a candidate cell group for the mobility management operation. For example, the measurement object may be a primary secondary cell in an SCG, and/or a frequency corresponding to the primary secondary cell in the SCG.

Certainly, in other embodiments, it can be directly agreed that the measurement object corresponding to the trigger condition is: a candidate cell group for the mobility management operation, and/or a frequency corresponding to the candidate cell group for the mobility management operation.

In an optional embodiment, the source SN sends first configuration information of the mobility management operation to the source MN, including: the source SN sending a measurement object corresponding to the trigger condition based on an RRC signaling.

In another optional embodiment, the source SN sends first configuration information of the mobility management operation to the source MN, including: the source SN sending a measurement object and/or a measurement frequency corresponding to the trigger condition based on an Xn signaling.

Here, the RRC signaling is an RRC signaling in a predetermined format, and the Xn signaling is an Xn signaling in a predetermined format.

At step S704: the source MN sends second configuration information of the mobility management operation to the UE.

In an optional embodiment, the source MN determines an MCG trigger condition, and determines a preconfigured condition based on an SCG trigger condition and the MCG trigger condition, and the preconfigured condition is used by the UE to trigger the mobility management operation for the MCG and/or the SCG.

In an optional embodiment, the source MN determines a candidate MCG, and the preconfigured condition is used by the UE to trigger the mobility management operations for the candidate MCG and the candidate SCG.

Here, the second configuration information includes at least one of: a candidate MCG and a candidate SCG; the preconfigured condition; or a measurement object corresponding to the preconfigured condition.

At step S705: the UE performs the mobility management operation for the MCG and/or the SCG based on the preconfigured condition.

In an optional embodiment, in case that the UE determines that the measurement object meets the preconfigured condition, the UE performs the mobility management operations for the candidate MCG and the candidate SCG.

### Example 2

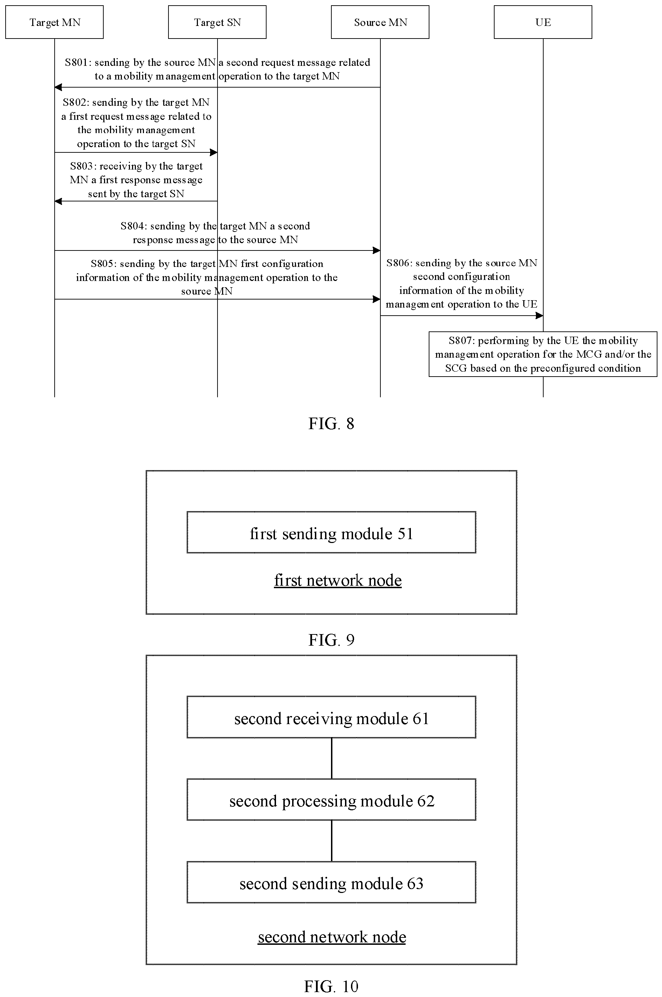

As shown in FIG. 8, an embodiment of the present invention provides a method for processing a mobility event, which is performed by a communication device, in which the communication device includes a first network node, a second network node, a target SN, and a UE. The method for processing the mobility event includes the following steps.

Here, the first network node includes a target MN, and the second network node includes a source MN.

At step S801: the source MN sends a second request message related to a mobility management operation to the target MN.

Here, the second request message includes at least one of: type information indicating a type of the mobility management operation, in which the type information is used to indicate a type of one of: a mobility operation triggered based on the trigger condition, and an operation of selectively activating a cell group; or purpose information indicating preparing a candidate MCG, or purpose information indicating preparing a candidate MCG and preparing a candidate SCG.

Here, the mobility management operation includes one of: a mobility operation triggered based on the trigger condition, and an operation of selectively activating a cell group. Here, the mobility operation triggered based on the trigger condition includes at least one of CHO, CPA, or CPC.

At step S802: the target MN sends a first request message related to the mobility management operation to the target SN.

Here, the first request message includes at least one of: type information indicating a type of the mobility management operation, in which the type information is used to indicate a type of one of: a mobility operation triggered based on the trigger condition, and an operation of selectively activating a cell group; or purpose information indicating preparing a candidate SCG and/or a candidate MCG.

At step S803: the target MN receives a first response message sent by the target SN.

Here, the first response message is used to indicate one of: acceptance of the mobility management operation, and rejection of the mobility management operation.

In an optional embodiment, the target SN determines to accept the mobility management operation and sends a candidate SCG to the source SN.

At step S804: the target MN sends a second response message to the source MN.

Here, the second response message is used to indicate one of: acceptance of the mobility management operation, and rejection of the mobility management operation.

At step S805: the target MN sends first configuration information of the mobility management operation to the source MN.

In an optional embodiment, step S805 includes: sending the first configuration information to the source MN in case that the target MN determines to accept the mobility management operation.

In an optional embodiment, the first configuration information includes an SCG trigger condition, the SCG trigger condition is used by the source MN to determine a preconfigured condition, and the preconfigured condition is used by the UE to trigger a mobility management operation for an MCG and/or an SCG.

In another optional embodiment, the target MN determines an SCG trigger condition, the first configuration information includes the SCG trigger condition and an MCG trigger condition; the SCG trigger condition and the MCG trigger condition are used by the source MN to determine a preconfigured condition, and the preconfigured condition is used by the UE to trigger a mobility management operation for an MCG and/or an SCG.

Here, each of the SCG trigger condition and the MCG trigger condition includes at least one of Event A1, Event A2, Event A3, Event A4, Event A5, Event A6, Event B1, or Event B2.

Here, the first configuration information includes at least one of: type information indicating a type of the mobility management operation, in which the type information is used to indicate a type of one of: a mobility operation triggered based on the trigger condition, and an operation of selectively activating a cell group; purpose information indicating preparing a candidate SCG and/or a candidate MCG; a candidate SCG; or a candidate SCG and a candidate MCG.

Here, the type information in the first configuration information is the same as or different from the type information in the second request message. The purpose information in the first configuration information is the same as or different from the purpose information in the second request message.

Here, the first configuration information includes at least one of a trigger condition, or a measurement object corresponding to the trigger condition; in which the measurement object includes at least one of a measurement cell, a measurement frequency, or a measurement radio access technology.

Here, the measurement cell includes any one cell or a cell group, in which the cell group includes a plurality of cells. The measurement frequency includes a frequency corresponding to any one cell or a frequency corresponding to a cell group. The measurement radio access technology includes, but is not limited to, at least one of 5G NR, 4G LTE or 3G UTRA.

In an optional embodiment, in case that the trigger condition is not configured with a corresponding measurement object, the measurement object corresponding to the trigger condition includes: a candidate cell group for the mobility management operation, and/or a frequency corresponding to a candidate cell group for the mobility management operation. For example, the measurement object may be at least one of: a primary secondary cell in an SCG, a primary cell in an MCG, a frequency corresponding to the primary secondary cell in the SCG, or a frequency corresponding to the primary cell in the MCG.

Certainly, in other embodiments, it can be directly agreed that the measurement object corresponding to the trigger condition is: a candidate cell group for the mobility management operation, and/or a frequency corresponding to the candidate cell group for the mobility management operation.

In an optional embodiment, the target MN sends first configuration information of the mobility management operation to the source MN, including: the target MN sending a measurement object corresponding to the trigger condition based on an RRC signaling.

In another optional embodiment, the target MN sends first configuration information of the mobility management operation to the source MN, including: the target MN sending a measurement object and/or a measurement frequency corresponding to the trigger condition based on an Xn signaling.

Here, the RRC signaling is an RRC signaling in a predetermined format, and the Xn signaling is an Xn signaling in a predetermined format.

At step S806: the source MN sends second configuration information of the mobility management operation to the UE.

In an optional embodiment, the source MN determines an MCG trigger condition, and determines a preconfigured condition based on an SCG trigger condition and the MCG trigger condition, and the preconfigured condition is used by the UE to trigger the mobility management operation for the MCG and/or the SCG.

In an optional embodiment, the source MN determines a candidate MCG, and the preconfigured condition is used by the UE to trigger the mobility management operations for the candidate MCG and the candidate SCG.

Here, the second configuration information includes at least one of: a candidate MCG and a candidate SCG; the preconfigured condition; or a measurement object corresponding to the preconfigured condition.

At step S807: the UE performs the mobility management operation for the MCG and/or the SCG based on the preconfigured condition.

In an optional embodiment, in case that the UE determines that the measurement object meets the preconfigured condition, the UE performs the mobility management operations for the candidate MCG and the candidate SCG.

It should be noted that those skilled in the art can understand that the method provided in the embodiments of the present invention can be executed alone or together with some methods in the embodiments of the present invention or some methods in related technologies.

As shown in FIG. 9, an embodiment of the present invention provides an apparatus for processing a mobility event, applied to a first network node and including: a first sending module 51 configured to send first configuration information to a second network node, in which the first configuration information at least includes a trigger condition; the trigger condition is used by the second network node to determine a preconfigured condition; and the preconfigured condition is used by a UE to trigger a mobility management operation for an MCG and/or an SCG.

In some embodiments, the mobility management operation includes one of: a mobility operation triggered based on the trigger condition; or an operation of selectively activating a cell group.

In some embodiments, the first configuration information includes at least one of:
type information indicating a type of the mobility management operation, in which the type information is used to indicate a type of one of: a mobility operation triggered based on the trigger condition, and an operation of selectively activating a cell group;
purpose information indicating preparing a candidate SCG and/or a candidate MCG; or
a candidate cell group for the mobility management operation; in which the candidate cell group includes the candidate SCG, or includes the candidate SCG and the candidate MCG.

In some embodiments, the first configuration information includes a measurement object; in which the measurement object includes at least one of a measurement cell, a measurement frequency, and a measurement radio access technology.

In some embodiments, in case that the trigger condition is not configured with a corresponding measurement object, the measurement object corresponding to the trigger condition includes: a candidate cell group for the mobility management operation, and/or a frequency corresponding to a candidate cell group for the mobility management operation.

In some embodiments, the measurement object corresponding to the trigger condition includes at least one of: a primary secondary cell in a candidate SCG; a primary cell in a candidate MCG; a frequency corresponding to the primary secondary cell in the candidate SCG; or a frequency corresponding to the primary cell in the candidate MCG.

An embodiment of the present invention provides an apparatus for processing a mobility event, applied to a first network node and including: a first sending module 51 configured to send a measurement cell corresponding to a trigger condition to a second network node based on an RRC signaling.

An embodiment of the present invention provides an apparatus for processing a mobility event, applied to a first network node and including: a first sending module 51 configured to send a measurement cell and/or a measurement frequency corresponding to a trigger condition to a second network node based on an Xn signaling.

In some embodiments, the trigger condition includes an SCG trigger condition; the SCG trigger condition and an MCG trigger condition determined by the second network node are used to determine the preconfigured condition; and the preconfigured condition is used by the UE to trigger the mobility management operation for the MCG and the SCG when the preconfigured condition is met.

An embodiment of the present invention provides an apparatus for processing a mobility event, applied to a first network node and including: a first sending module 51 configured to send a first request message to a target SN, in which the first request message is used to request the candidate SCG on which the mobility management operation is performed.

In some embodiments, the first request message further includes at least one of:
type information indicating a type of the mobility management operation, in which the type information is used to indicate a type of one of: a mobility operation triggered based on the trigger condition, and an operation of selectively activating a cell group; or
purpose information indicating preparing the candidate SCG.

An embodiment of the present invention provides an apparatus for processing a mobility event, applied to a first network node and including: a first receiving module configured to receive a first response message sent by the target SN, in which the first response message is used to indicate one of: acceptance of the mobility management operation; or rejection of the mobility management operation.

In some embodiments, the first network node includes a source secondary node (SN), and the second network node includes a source master node (MN).

An embodiment of the present invention provides an apparatus for processing a mobility event, applied to a first network node and including: a first sending module 51 configured to send the first configuration information to the source MN in response to a first response message received from the target SN indicating acceptance of the mobility management operation and/or carrying of the candidate SCG.

In some embodiments, the first network node includes a target MN, and the second network node includes a source MN.

An embodiment of the present invention provides an apparatus for processing a mobility event, applied to a first network node and including: a first sending module 51 configured to send the first request message to the target SN in response to receiving a second request message sent by the source MN; in which the second request message includes at least one of: purpose information indicating preparing a candidate MCG, or purpose information indicating preparing a candidate MCG and preparing a candidate SCG.

An embodiment of the present invention provides an apparatus for processing a mobility event, applied to a first network node and including: a first receiving module configured to, in response to receiving a first response message sent by the target SN, send a second response message to the source MN; in which the second response message is used to indicate one of: acceptance of the mobility management operation; or rejection of the mobility management operation.

An embodiment of the present invention provides an apparatus for processing a mobility event, applied to a first network node and including: a first sending module 51 configured to send the first configuration information to the source MN after sending the second response message indicating acceptance of the mobility management operation.

In some embodiments, the trigger condition includes an SCG trigger condition and an MCG trigger condition; the SCG trigger condition and the MCG trigger condition are used by the source MN to determine the preconfigured condition; and the preconfigured condition is used by the UE to trigger the mobility management operation for the MCG and the SCG when the preconfigured condition is met.

An embodiment of the present invention provides an apparatus for processing a mobility event, applied to a target MN and including: a first processing module configured to determine an MCG trigger condition and/or determine a candidate MCG.

As shown in FIG. 10, an embodiment of the present invention provides an apparatus for processing a mobility event, applied to a second network node and including: a second receiving module 61 configured to receive first configuration information sent by a first network node, in which the first configuration information at least includes a trigger condition; a second processing module 62 configured to determine second configuration information including a preconfigured condition based on the trigger condition; and a second sending module 63 configured to send the second configuration information to a UE; in which the second configuration information is used by the UE to trigger a mobility management operation for an MCG and/or an SCG.

In some embodiments, the mobility management operation includes one of: a mobility operation triggered based on the trigger condition; or an operation of selectively activating a cell group.

In some embodiments, the trigger condition includes an SCG trigger condition; and the second processing module 62 is configured to determine the second configuration information including the preconfigured condition based on the SCG trigger condition and an MCG trigger condition determined by the second network node.

An embodiment of the present invention provides an apparatus for processing a mobility event, applied to a second network node and including: a second processing module 62 configured to determine the second configuration information including the preconfigured condition based on the SCG trigger condition and an MCG trigger condition determined by the second network node.

In some embodiments, the first configuration information includes at least one of:
type information indicating a type of the mobility management operation, in which the type information is used to indicate a type of one of: a mobility operation triggered based on the trigger condition, and an operation of selectively activating a cell group;
purpose information indicating preparing a candidate SCG; or
a candidate cell group for the mobility management operation; in which the candidate cell group includes: the candidate SCG.

In some embodiments, the trigger condition includes an SCG trigger condition and an MCG trigger condition; and the second processing module 62 is configured to determine the second configuration information including the preconfigured condition based on the SCG trigger condition and the MCG trigger condition.

An embodiment of the present invention provides an apparatus for processing a mobility event, applied to a second network node and including: a second processing module 62 configured to determine the second configuration information including the preconfigured condition based on the SCG trigger condition and the MCG trigger condition.

In some embodiments, the first configuration information includes at least one of:
type information indicating a type of the mobility management operation, in which the type information is used to indicate a type of one of: a mobility operation triggered based on the trigger condition, and an operation of selectively activating a cell group;
purpose information indicating preparing a candidate SCG, or purpose information indicating preparing a candidate SCG and preparing a candidate MCG; or
a candidate cell group for the mobility management operation; in which the candidate cell group includes the candidate SCG, or includes the candidate SCG and the candidate MCG.

In some embodiments, the second configuration information includes at least one of:
a candidate MCG and/or a candidate SCG;
type information indicating a type of the mobility management operation, in which the type information is used to indicate a type of one of: a mobility operation triggered based on the trigger condition, and an operation of selectively activating a cell group; or
a measurement object.

In some embodiments, the first configuration information includes a measurement object; in which the measurement object includes at least one of: a measurement cell, a measurement frequency, and a measurement radio access technology.

In some embodiments, in case that the trigger condition is not configured with a corresponding measurement object, the measurement object corresponding to the trigger condition includes: a candidate cell group for the mobility management operation, or a frequency corresponding to a candidate cell group for the mobility management operation.

In some embodiments, the measurement object corresponding to the trigger condition includes at least one of: a primary secondary cell in a candidate SCG; a primary cell in a candidate MCG; a frequency corresponding to the primary secondary cell in the candidate SCG; or a frequency corresponding to the primary cell in the candidate MCG.

An embodiment of the present invention provides an apparatus for processing a mobility event, applied to a second network node and including: a second receiving module 61 configured to receive the measurement cell corresponding to the trigger condition sent by the first network node based on a radio resource control (RRC) signaling.

An embodiment of the present invention provides an apparatus for processing a mobility event, applied to a second network node and including: a second receiving module 61 configured to receive the measurement cell and/or the measurement frequency corresponding to the trigger condition sent by the first network node based on an Xn signaling.

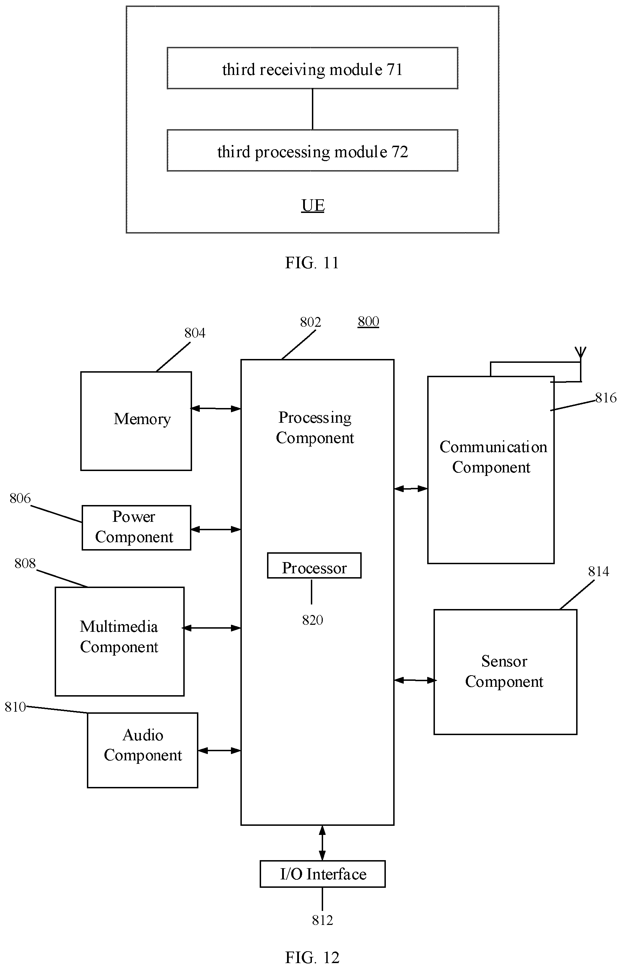

As shown in FIG. 11, an embodiment of the present invention provides an apparatus for processing a mobility event, applied to a UE and including: a third receiving module 71 configured to receive second configuration information sent by a second network node, in which the second configuration information at least includes a preconfigured condition, in which the preconfigured condition is determined by the second network node based on a trigger condition in first configuration information obtained from a first network node; and a third processing module 72 configured to perform a mobility management operation for an MCG and/or an SCG based on the preconfigured condition.

In some embodiments, the second configuration information includes at least one of:
a candidate MCG and/or a candidate SCG;
type information indicating a type of the mobility management operation, in which the type information is used to indicate a type of one of: a mobility operation triggered based on the trigger condition, and an operation of selectively activating a cell group; or
a measurement object.

In some embodiments, the mobility management operation includes one of: a mobility operation triggered based on the trigger condition; or an operation of selectively activating a cell group.

An embodiment of the present invention provides an apparatus for processing a mobility event, applied to a UE and including: a third processing module configured to perform a mobility management operation for an MCG and/or an SCG in response to a measurement object meeting the preconfigured condition.

An embodiment of the present invention provides an apparatus for processing a mobility event, applied to a UE and including: a third processing module configured to perform a mobility management operation for a candidate MCG and a candidate SCG in response to a measurement object meeting the preconfigured condition.

The specific manner in which each module in the apparatus in the above embodiments performs operations has been described in detail in connection with the embodiments of the method, and will not be elaborated here.

An embodiment of the present invention provides a communication device, including a processor and a memory for storing instructions executable by the processor; in which the processor is configured to implement the method for processing the mobility event in any embodiment of the present invention when running the executable instructions.

In an embodiment, the communication device may include, but is not limited to, at least one of: a target MN, a source MN, a target SN, and a UE.

The processor may include various types of storage media, which are non-temporary computer storage media that can continue to memorize information stored therein after the UE is powered down.

The processor may be connected to the memory via a bus or the like, and may be used to read an executable program stored in the memory, for example, at least one of the methods shown in FIG. 2 to FIG. 8.

An embodiment of the present invention provides a computer storage medium having stored therein a computer executable program that, when executed by a processor, causes the method for processing the mobility event in any embodiment of the present invention, for example, at least one of the methods shown in FIG. 5 to FIG. 9, to be implemented.

The specific manner in which each module in the apparatus and the storage medium in the above embodiments performs operations has been described in detail in connection with the embodiments of the method, and will not be elaborated here.

FIG. 12 is a block diagram showing a user equipment 800 according to an illustrative embodiment. For example, the user equipment 800 can be a mobile phone, a computer, a digital broadcast user equipment, a messaging device, a game console, a tablet device, a medical device, a fitness device, a personal digital assistant, or the like.

Referring to FIG. 12, the user equipment 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the user equipment 800, such as the operations associated with display, phone calls, data communications, camera operations, and recording operations. The processing component 802 can include one or more processors 820 to execute instructions to perform all or some of the steps in the above-described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the user equipment 800. Examples of such data include instructions for any applications or methods operated on the user equipment 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the user equipment 800. The power component 806 may include a power management system, one or more power sources, and other components associated with the generation, management, and distribution of power in the user equipment 800.

The multimedia component 808 includes a screen providing an output interface between the user equipment 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a time duration and a pressure associated with the touch or swipe action. In some embodiments, the multimedia component 808 includes a front camera and/or a rear camera. The front camera and/or the rear camera may receive an external multimedia datum while the user equipment 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the user equipment 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes one or more sensors to provide status assessments of various aspects of the user equipment 800. For instance, the sensor component 814 may detect an open/closed status of the user equipment 800, relative positioning of components, e.g., the display and the keypad, of the user equipment 800, a change in position of the user equipment 800 or a component of the user equipment 800, a presence or absence of user contact with the user equipment 800, an orientation or an acceleration/deceleration of the user equipment 800, and a change in temperature of the user equipment 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the user equipment 800 and other devices. The user equipment 800 can access a wireless network based on a communication standard, such as Wi-Fi, 4G, or 5G, or a combination thereof. In an illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the user equipment 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing steps of the method in the above-mentioned embodiments.

In an illustrative embodiment, there is also provided a non-transitory computer readable storage medium including instructions, such as included in the memory 804, executable by the processor 820 in the user equipment 800, for completing steps of the above-mentioned method. For example, the non-transitory computer-readable storage medium may be a ROM, a random access memory (RAM), a CD-ROM, a magnetic tape, a floppy disc, an optical data storage device, and the like.

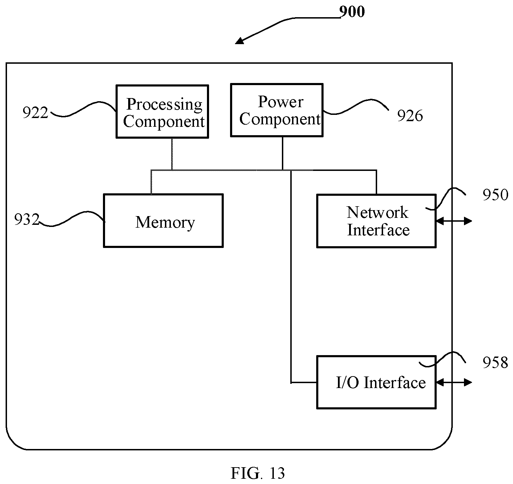

FIG. 13 is a block diagram of a base station 900 shown in an embodiment of the present invention. For example, the base station 900 may be provided as a network side device. Referring to FIG. 13, the base station 900 includes a processing component 922, which further includes at least one processor; and a memory resource represented by a memory 932 for storing instructions executable by the processing component 1022, such as an application program. The application program stored in the memory 932 may include one or more modules each corresponding to a set of instructions. In addition, the processing component 922 is configured to execute instructions to perform any method of the above-mentioned methods applied to the station.

The base station 900 may also include a power supply component 926 configured to perform power management of the base station 900, a wired or wireless network interface 950 configured to connect the base station 900 to a network, and an input/output (I/O) interface 958. The base station 900 can operate based on an operating system stored in the memory 932, such as Windows Server TM, Mac OS XTM, Unix TM, Linux TM, Free BSD TM or the like.

Other embodiments of the present invention will be apparent to those skilled in the art from consideration of the specification and practice of the present invention disclosed here. The present invention is intended to cover any variations, uses, or adaptations of the present invention following the general principles of the present invention and including such departures from the present invention as come within known or customary practice in the art. It is intended that the specification and examples be considered as illustrative only, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. The scope of the present invention is only limited by the appended claims.

## Claims

1. A method for processing a mobility event, performed by a first network node, comprising:
sending first configuration information to a second network node, wherein the first configuration information at least comprises a trigger condition; the trigger condition is used by the second network node to determine a preconfigured condition; and the preconfigured condition is used by a user equipment (UE) to trigger a mobility management operation for a master cell group (MCG) and/or a secondary cell group (SCG).

2. The method according to claim 1, wherein the mobility management operation comprises one of:
a mobility operation triggered based on the trigger condition; or
an operation of selectively activating a cell group.

3. The method according to claim 1 or 2, wherein the first configuration information comprises at least one of:
type information indicating a type of the mobility management operation, wherein the type information is used to indicate a type of one of: a mobility operation triggered based on the trigger condition, and an operation of selectively activating a cell group;
purpose information indicating preparing a candidate SCG and/or a candidate MCG; or
a candidate cell group for the mobility management operation; wherein the candidate cell group comprises the candidate SCG, or comprises the candidate SCG and the candidate MCG.

4. The method according to claim 1 or 2, wherein the first configuration information comprises a measurement object; wherein
the measurement object comprises at least one of: a measurement cell, a measurement frequency, and a measurement radio access technology.

5. The method according to claim 4, wherein in case that the trigger condition is not configured with a corresponding measurement object, the measurement object corresponding to the trigger condition comprises: a candidate cell group for the mobility management operation, and/or a frequency corresponding to a candidate cell group for the mobility management operation.

6. The method according to claim 5, wherein the measurement object corresponding to the trigger condition comprises at least one of:
a primary secondary cell in a candidate SCG;
a primary cell in a candidate MCG;
a frequency corresponding to the primary secondary cell in the candidate SCG; or
a frequency corresponding to the primary cell in the candidate MCG.

7. The method according to claim 4, wherein sending the first configuration information to the second network node comprises at least one of:
sending the measurement cell corresponding to the trigger condition to the second network node based on a radio resource control (RRC) signaling; or
sending the measurement cell and/or the measurement frequency corresponding to the trigger condition to the second network node based on an Xn signaling.

8. The method according to any one of claims 1 to 2, and 5 to 7, wherein the trigger condition comprises an SCG trigger condition; the SCG trigger condition and an MCG trigger condition determined by the second network node are used to determine the preconfigured condition;
the preconfigured condition is used by the UE to trigger the mobility management operation for the MCG and the SCG when the preconfigured condition is met.

9. The method according to any one of claims 1 to 2, and 5 to 7, comprising:
sending a first request message to a target secondary node (SN), wherein the first request message is used to request the candidate SCG on which the mobility management operation is performed.

10. The method according to claim 9, wherein the first request message further comprises at least one of:
type information indicating a type of the mobility management operation, wherein the type information is used to indicate a type of one of: a mobility operation triggered based on the trigger condition, and an operation of selectively activating a cell group; or
purpose information indicating preparing the candidate SCG.

11. The method according to claim 9, comprising:
receiving a first response message sent by the target SN, wherein the first response message is used to indicate one of:
acceptance of the mobility management operation; or
rejection of the mobility management operation.

12. The method according to claim 9, wherein the first network node comprises a source secondary node (SN), and the second network node comprises a source master node (MN).

13. The method according to claim 12, wherein sending the first configuration information to the second network node comprises:
sending the first configuration information to the source MN in response to a first response message received from the target SN indicating acceptance of the mobility management operation and/or carrying of the candidate SCG.

14. The method according to claim 9, wherein the first network node comprises a target MN, and the second network node comprises a source MN.

15. The method according to claim 14, wherein sending the first request message to the target SN comprises:
sending the first request message to the target SN in response to receiving a second request message sent by the source MN;
wherein the second request message comprises at least one of:
purpose information indicating preparing a candidate MCG; or
purpose information indicating preparing a candidate MCG and preparing a candidate SCG.

16. The method according to claim 15, further comprising:
sending a second response message to the source MN in response to receiving a first response message sent by the target SN; wherein the second response message is used to indicate one of:
acceptance of the mobility management operation; or
rejection of the mobility management operation.

17. The method according to claim 16, wherein sending the first configuration information to the second network node comprises:
sending the first configuration information to the source MN after sending the second response message indicating acceptance of the mobility management operation.

18. The method according to claim 14, wherein the trigger condition comprises: an SCG trigger condition and an MCG trigger condition; the SCG trigger condition and the MCG trigger condition are used by the source MN to determine the preconfigured condition;
the preconfigured condition is used by the UE to trigger the mobility management operation for the MCG and the SCG when the preconfigured condition is met.

19. A method for processing a mobility event, performed by a second network node, comprising:
receiving first configuration information sent by a first network node, wherein the first configuration information at least comprises a trigger condition;
determining second configuration information comprising a preconfigured condition based on the trigger condition; and
sending the second configuration information to a user equipment (UE); wherein the second configuration information is used by the UE to trigger a mobility management operation for a primary cell group (MCG) and/or a secondary cell group (SCG).

20. The method according to claim 19, wherein the mobility management operation comprises one of:
a mobility operation triggered based on the trigger condition; or
an operation of selectively activating a cell group.

21. The method according to claim 19 or 20, wherein the trigger condition comprises an SCG trigger condition;
determining the second configuration information comprising the preconfigured condition based on the trigger condition comprises:
determining the second configuration information comprising the preconfigured condition based on the SCG trigger condition and an MCG trigger condition determined by the second network node.

22. The method according to claim 21, wherein the first configuration information comprises at least one of:
type information indicating a type of the mobility management operation, wherein the type information is used to indicate a type of one of: a mobility operation triggered based on the trigger condition, and an operation of selectively activating a cell group;
purpose information indicating preparing a candidate SCG; or
a candidate cell group for the mobility management operation; wherein the candidate cell group comprises: the candidate SCG.

23. The method according to claim 19 or 20, wherein the trigger condition comprises: an SCG trigger condition and an MCG trigger condition;
determining the second configuration information comprising the preconfigured condition based on the trigger condition comprises:
determining the second configuration information comprising the preconfigured condition based on the SCG trigger condition and the MCG trigger condition.

24. The method according to claim 23, wherein the first configuration information comprises at least one of:
type information indicating a type of the mobility management operation, wherein the type information is used to indicate a type of one of: a mobility operation triggered based on the trigger condition, and an operation of selectively activating a cell group;
purpose information indicating preparing a candidate SCG, or purpose information indicating preparing a candidate SCG and preparing a candidate MCG; or
a candidate cell group for the mobility management operation; wherein the candidate cell group comprises the candidate SCG, or comprises the candidate SCG and the candidate MCG.

25. The method according to claim 19 or 20, wherein the second configuration information further comprises:
a candidate MCG and/or a candidate SCG.

26. The method according to claim 19 or 20, wherein the first configuration information comprises a measurement object; wherein
the measurement object comprises at least one of: a measurement cell, a measurement frequency, and a measurement radio access technology.

27. The method according to claim 26, wherein in case that the trigger condition is not configured with a corresponding measurement object, the measurement object corresponding to the trigger condition comprises: a candidate cell group for the mobility management operation, or a frequency corresponding to a candidate cell group for the mobility management operation.

28. The method according to claim 27, wherein the measurement object corresponding to the trigger condition comprises at least one of:
a primary secondary cell in a candidate SCG;
a primary cell in a candidate MCG;
a frequency corresponding to the primary secondary cell in the candidate SCG; or
a frequency corresponding to the primary cell in the candidate MCG.

29. The method according to claim 26, wherein receiving the first configuration information sent by the first network node comprises at least one of:
receiving the measurement cell corresponding to the trigger condition sent by the first network node based on a radio resource control (RRC) signaling; or
receiving the measurement cell and/or the measurement frequency corresponding to the trigger condition sent by the first network node based on an Xn signaling.

30. A method for processing a mobility event, performed by a user equipment (UE), comprising:
receiving second configuration information sent by a second network node, wherein the second configuration information at least comprises a preconfigured condition; wherein the preconfigured condition is determined by the second network node based on a trigger condition in first configuration information obtained from a first network node; and
performing a mobility management operation for a primary cell group (MCG) and/or a secondary cell group (SCG) based on the preconfigured condition.

31. The method according to claim 31, wherein the second configuration information further comprises:
a candidate MCG and/or a candidate SCG.

32. The method according to claim 30 or 31, wherein the mobility management operation comprises one of:
a mobility operation triggered based on the trigger condition; or
an operation of selectively activating a cell group.

33. An apparatus for processing a mobility event, applied to a first network node, comprising:
a first sending module configured to send first configuration information to a second network node, wherein the first configuration information at least comprises a trigger condition; the trigger condition is used by the second network node to determine a preconfigured condition; and the preconfigured condition is used by a user equipment (UE) to trigger a mobility management operation for a master cell group (MCG) and/or a secondary cell group (SCG).

34. An apparatus for processing a mobility event, applied to a second network node, comprising:
a second receiving module configured to receive first configuration information sent by a first network node, wherein the first configuration information at least comprises a trigger condition;
a second processing module configured to determine second configuration information comprising a preconfigured condition based on the trigger condition; and
a second sending module configured to send the second configuration information to a user equipment (UE); wherein the second configuration information is used by the UE to trigger a mobility management operation for a primary cell group (MCG) and/or a secondary cell group (SCG).

35. An apparatus for processing a mobility event, applied to a user equipment (UE), comprising:
a third receiving module configured to receive second configuration information sent by a second network node, wherein the second configuration information at least comprises a preconfigured condition, wherein the preconfigured condition is determined by the second network node based on a trigger condition in first configuration information obtained from a first network node; and
a third processing module configured to perform a mobility management operation for a primary cell group (MCG) and/or a secondary cell group (SCG) based on the preconfigured condition.

36. A communication device, comprising:
a processor; and
a memory for storing instructions executable by the processor;
wherein the processor is configured to implement the method for processing the mobility event according to any one of claims 1 to 18, or claims 19 to 29, or claims 30 to 32 when running the executable instructions.

37. A computer storage medium having stored therein a computer executable program that, when executed by a processor, causes the method for processing the mobility event according to any one of claims 1 to 18, or claims 19 to 29, or claims 30 to 32 to be implemented.
